# EUROPEAN PATENT APPLICATION

(11) **EP 4 113 413 A1**
(43) Date of publication of application: **04.01.2023**
(21) Application number: 22181652.3
(22) Date of filing: 28.06.2022
(51) Int. Cl.: G06Q 30/02

(54) **AUTOMATIC PURCHASE OF DIGITAL WISH LISTS CONTENT BASED ON USER SET THRESHOLDS**

(30) Priority: 01.07.2021 US 202117365769
(71) Applicant: Sony Interactive Entertainment LLC, San Mateo, CA 94404 (US)
(72) Inventor: ROSS, Malcolm, California, 94404 (US); NAWABI, Ajmal Alex, California, 94404 (US)
(74) Representative: D Young & Co LLP

(57) **Abstract**

A method is provided for automatic purchase of digital media and digital assets. The method may include asking at least one user to provide a preselected list of products. The method may also include generating a recommended list of additional products using a machine-learning algorithm, where the machine-learning algorithm includes one of collaborative filtering algorithm, content-based filtering, desirable content model, personalized video game ranker, or knowledge based recommendation systems. The method may also include adding the recommended list of additional products to the preselected list of the at least one user to provide an augmented interest list to the at least one user. The method may also include asking the at least one user to establish parameters for automatic purchases based upon the augmented interest list. The method may further include automatically purchasing one or more products based upon the prices of the one or more products meeting the parameters.

## Description

### BACKGROUND

### 1. Field of Disclosure

The present disclosure generally relates to systems and method for populating and acquiring games and gaming related items within an online gaming network.

### 2. Description of the Related Art

Many online gaming platforms provide users the opportunity to purchase games, game assets, or other items for use in the gaming environment through online stores and marketplaces. Due to the digital nature of these goods, the demand and pricing of such items may vary over time. Furthermore, gaming designers and retailers may desire to offer limited time discounts for certain items, which may be advertised through email or other forms of communication. However, these advertised discounts or limited time deals may be lost amid large volumes of email.

### BRIEF SUMMARY

In one aspect, a method is provided for automatic purchase of digital media and digital assets. The method may include asking at least one user to provide a preselected list of products. The method may also include generating a recommended list of additional products using a machine-learning algorithm or model, wherein the machine-learning algorithm includes one of collaborative filtering algorithm, content-based filtering, desirable content model, personalized video game ranker, or knowledge based recommendation systems. The method may also include adding the recommended list of additional products to the preselected list of the at least one user to provide an augmented interest list to the at least one user. The method may also include asking the at least one user to establish parameters for automatic purchases based upon the augmented interest list. The method may further include automatically purchasing one or more products based upon the prices of the one or more products meeting the parameters.

In another aspect, a system for automatic purchasing of digital media. The system may include one or more processors and a non-transitory computer readable medium comprising instructions stored therein. The instructions, when executed by the one or more processors, may cause the processors to perform operations that may include asking at least one user to provide preselected list of products. The operations may also include generating a recommended list of additional products using a machine-learning algorithm, wherein the machine-learning algorithm includes one of collaborative filtering algorithm, content-based filtering, desirable content model, personalized video game ranker, or knowledge based recommendation systems. The operations may also include adding the recommended list of additional products to the preselected list of the at least one user to provide an augmented interest list to the at least one user. The operations may also include asking the at least one user to establish parameters for automatic purchases based upon the augmented interest list and automatically purchasing one or more products based upon the prices of the one or more products meeting the parameters.

In a further aspect, a non-transitory computer readable medium may include instructions. The instructions, when executed by a computing system, may cause the computing system to perform operations that may include asking at least one user to provide preselected list of products. The operations may also include generating a recommended list of additional products using a machine-learning algorithm, wherein the machine-learning algorithm includes one of collaborative filtering algorithm, content-based filtering, desirable content model, personalized video game ranker, or knowledge based recommendation systems. The operations may also include adding the recommended list of additional products to the preselected list of the at least one user to provide an augmented interest list to the at least one user. The operations may also include asking the at least one user to establish parameters for automatic purchases based upon the augmented interest list and automatically purchasing one or more products based upon the prices of the one or more products meeting the parameters.

Additional embodiments and features are set forth in part in the description that follows, and will become apparent to those skilled in the art upon examination of the specification or may be learned by the practice of the disclosed subject matter. A further understanding of the nature and advantages of the disclosure may be realized by reference to the remaining portions of the specification and the drawings, which forms a part of this disclosure.

### BRIEF DESCRIPTION OF THE DRAWINGS

The description will be more fully understood with reference to the following figures and data graphs, which are presented as various embodiments of the disclosure and should not be construed as a complete recitation of the scope of the disclosure, wherein:
FIG. 1 illustrates an exemplary network environment in which a system for automatic purchasing of digital media;
FIG. 2 is an exemplary user device that may be used in context of the system of FIG. 1;
FIG. 3 is a block diagram of an exemplary host server of FIG. 1, in accordance with some aspects of the disclosed technology;
FIG. 4 is a block diagram illustrating an exemplary machining learning module of FIG. 3 for recommending products, in accordance with some aspects of the disclosed technology; and
FIG. 5 is a flowchart illustrating an exemplary method for automatic purchasing of products (e.g. video games), in accordance with some aspects of the disclosed technology.

### DETAILED DESCRIPTION

The disclosure may be understood by reference to the following detailed description, taken in conjunction with the drawings as described below. It is noted that, for purposes of illustrative clarity, certain elements in various drawings may not be drawn to scale.

As discussed in the background, the advertised discounts or limited time deals may be lost amid large volumes of email. As such, there is a desire to provide a system and methods whereby users may automatically purchase goods or services at or below a user-defined threshold.

The present disclosure relates to systems and methods for providing, populating, and acquiring digital assets or digital media in an online gaming network environment. In various aspects, the digital assets or digital media to be acquired may be preselected by a user. In another aspect, the digital assets or digital media to be acquired may be identified through machine-learning based upon a user's social networks and other online activities.

The present disclosure describes methods and systems for automatic purchase of digital media or digital assets or related items based upon an augmented interest list of products for a user. The disclosure includes updating the list of products by creating lists of additional products using various machine-learning algorithms.

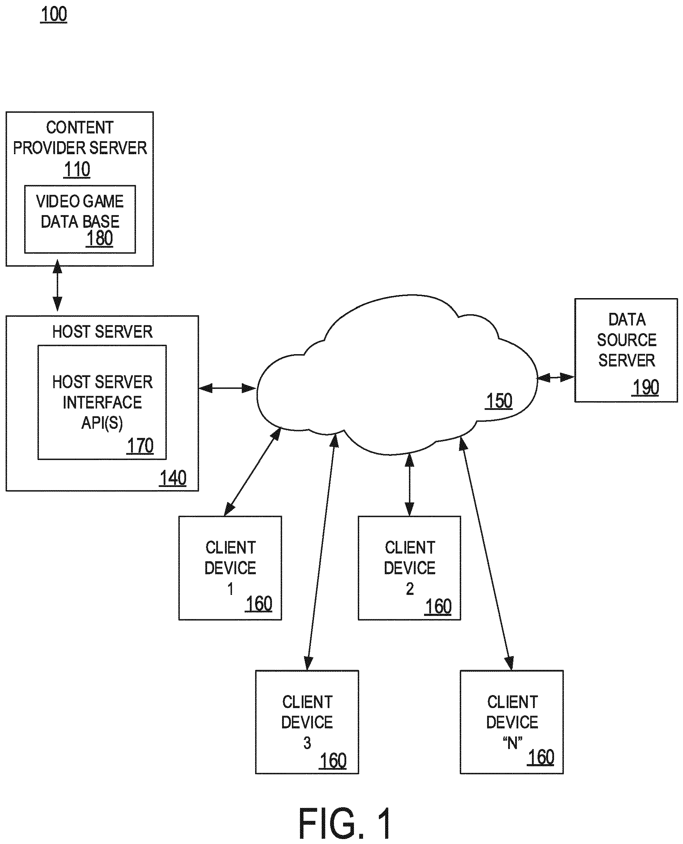

FIG. 1 illustrates a network system or network environment 100 for automatic purchase of digital media on wish lists based on user set thresholds. The network system 100 may include a content server 110 that provides streaming content (e.g., video games), stored in a host database 180, for distribution of video games online using one or more content server application program interfaces (APIs) 170. The network system 100 may also include a content delivery host server 140, a public network 150, one or more user devices 160, and one or more data source server 190. The host database 180 may store video games. The host server 140 may retrieve data from the host database 180.

Content servers 110 may maintain and provide game content available for streaming. Such game content may include but is not limited to full games, game trials, game related images, game related audio files, or other game assets. The content servers 110 may be associated with any content provider, such as but not limited to Sony ^{®} or PlayStation^{®}, among others that make its content available to users over the network system 100. In various aspects, acquiring the game content as used herein may also include viewing or playing video game content that are streamed or downloaded to one or more user devices.

The content acquired from the content server 110 may be provided through a content server API 170, which allows various types of content server 110 to communicate over the public network 150. The content server API 170 may be specific to the particular language, operating system, protocols, etc. of the content server 110 providing the streaming content. In a network system 100 that includes multiple different types of content servers 110, there may likewise be a corresponding number of content server APIs 170.

The content server API 170 therefore facilitates direct or indirect access for each of the user devices 160 to the content hosted by the content servers 110. Additional information, such as metadata, about the accessed content can also be provided by the content server API 170 to the user device 160. As described below, the additional information *(i.e.* metadata) can be usable to provide details about the content being streamed to the user device 160. Finally, additional services associated with the accessed content such as chat services, ratings and profiles can be provided from the content servers 110 to the user device 160 via the content server API 170.

The content server API 170 can be accessed by a content delivery host server 140. The content delivery host server 140 may provide resources and files related to the game stream, including promotional images and service configurations with user devices 160. The content delivery host server 140 can also be called upon by the user devices 160 that request to stream or subscribe to specific content.

The content server API 170 may be accessed by a host server API 170 in order to obtain information about available gaming content for the user device 160. As described below, the additional information about the content may include metadata describing the available content *(e.g.,* by author, title, genre). The information may also include a location where the content is stored *(e.g.,* URL, file server) so that the user device can proceed with retrieving the content from the content server 110. Furthermore, the host server API 170 may include instructions or graphic user interfaces for implementing functionalities *(e.g.,* chat) that would allow users at different user devices 160 to interact with each other. Such instructions may be used by the host server API 170 to provide certain functionalities to the user device 160.

The host server API 170 may be responsible for communicating with different content servers 110 in order to provide gaming content to the user devices 160. The host server API 170 may carry out instructions, for example, for identifying the format of the game content and formatting the game content to be playable on the user device 160. Such formatting may include identifying the metadata associated with each of the content then using various different types of conversion techniques so that data stored in one format at the content servers 110 may be rendered and displayed on the user devices 160, which may require a different format. As such, game content of different formats may be provided to and made compatible with user device 160 via the host server API 170.

The public network 150 facilitates communication of the streaming game from the content server 110 and the host server 140 with the plurality of user devices 160. The public network 150 can also include one or more private networks, such as, a local area network (LAN), a wide area network (WAN), or a network of public/private networks, such as the Internet. The Internet is a broad network of interconnected computers and servers allowing for the transmission and exchange of Internet Protocol (IP) data between user devices connected through a network service provider. Examples of network service providers include the public switched telephone network, a cable service provider, a provider of digital subscriber line (DSL) services, a satellite service provider, or any internet service provider.

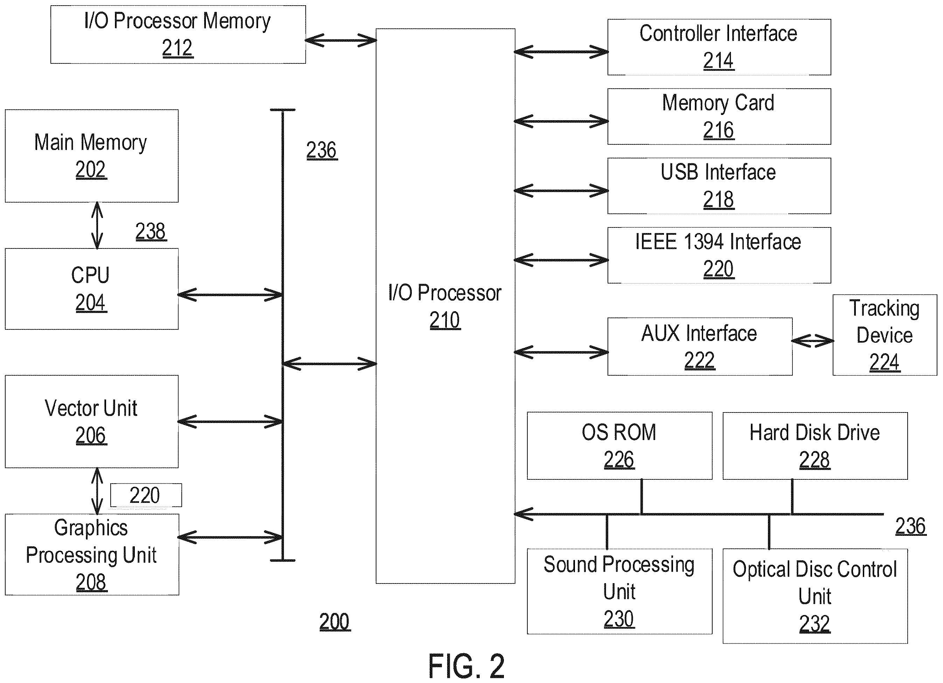

The user device 160 may be one or more of a plurality of different types of computing devices. For example, the user device 160 may be any number of different gaming consoles, mobile devices, laptops, and desktops. Such user devices 160 may also be configured to access data from other storage media, such as, but not limited to memory cards or disk drives as may be appropriate in the case of downloaded services. Such user devices 160 may include standard hardware computing components such as, but not limited to network and media interfaces, non-transitory computer-readable storage (memory), and processors for executing instructions that may be stored in memory. These user devices 160 may also run using a variety of different operating systems *(e.g.,* iOS, Android), applications or computing languages *(e.g.,* C++, JavaScript). An exemplary user device 160 is described in detail herein with respect to FIGURE 2.

FIG. 2 is an exemplary computing device 200 that may be used in context of the system of FIG. 1 to view streaming game, among other functionalities. The computing device 200 may correspond to user device 160 and/or the data source server 190 of FIG. 1 and may be inclusive of desktop, laptop, tablet, mobile device, console gaming system, etc. The computing device 200 is a device that the user can utilize to facilitate carrying out features of the present disclosure pertaining to automatic purchase of the video games or digital media and related items. In particular, the computing device 200 allows the user to view the streamed game at any location and time remotely.

The computing device 200 may include various elements as illustrated in FIG. 2. It should be noted that the elements are exemplary and that other aspects may incorporate more or less than the elements illustrated. With reference to FIG. 2, the computing device 200 includes a main memory 202, a central processing unit (CPU) 204, at least one vector unit 206, a graphics processing unit 208, an input/output (I/O) processor 210, an I/O processor memory 212, a controller interface 214, a memory card 216, a Universal Serial Bus (USB) interface 218, and an IEEE interface 220, an auxiliary (AUX) interface 222 for connecting a tracking device 224, although other bus standards and interfaces may be utilized. The computing device 200 further includes an operating system read-only memory (OS ROM) 226, a sound processing unit 228, an optical disc control unit 230, and a hard disc drive 232, which are connected via a bus 234 to the I/O processor 210. The computing device 200 further includes at least one tracking device 224.

The tracking device 224 may be a camera, which includes eye-tracking capabilities. The camera may be integrated into or attached as a peripheral device to computing device 200 . According to various aspects, typical eye-tracking devices may use infrared non-collimated light reflected from the eye and sensed by a camera or optical sensor. The information is then analyzed to extract eye rotation from changes in reflections. Camera-based trackers focus on one or both eyes and record their movement as the user looks at some type of stimulus. Camera-based eye trackers use the center of the pupil and light to create corneal reflections (CRs). The vector between the pupil center and the CR can be used to compute the point of regard on surface or the gaze direction. A simple calibration procedure of the user may be needed before using the eye tracker.

In other aspects, trackers that are more sensitive may use reflections from the front of the cornea and that back of the lens of the eye as features to track over time. In yet other aspects, even more sensitive trackers image features from inside the eye, including retinal blood vessels, and follow these features as the eye rotates. Most eye-tracking devices may use a sampling rate of at least 30 Hz, although 50/60 Hz is most common. Some tracking devises may run as high as 240 Hz, which is needed to capture detail of very rapid eye movement. The foregoing describes example eye-tracking technology that may be used in accordance with the present disclosure. In various aspects, any known eye gaze tracking technology that one skilled in the art would be capable of applying could be used.

A range camera may instead be used with the present disclosure to capture gestures made by the user and is capable of facial recognition. A range camera is typically used to capture and interpret specific gestures, which allows a hands-free control of an entertainment system. This technology may use an infrared projector, a camera, a depth sensor, and a microchip to track the movement of objects and individuals in three dimensions. This user device may also employ a variant of image-based three-dimensional reconstruction.

The tracking device 224 may include a microphone integrated into or attached as a peripheral device to computing device 200 that captures voice data. The microphone may conduct acoustic source localization and/or ambient noise suppression. The microphones may be usable to receive verbal instructions from the user to schedule, retrieve, and display content on the computing device 200 .

Alternatively, the tracking device 224 may be the controller of the computing device 200 . The controller may use a combination of built-in accelerometers and infrared detection to sense its position in 3D space when pointed at the LEDs in a sensor nearby, attached to, or integrated into the console of the entertainment system. This design allows users to control functionalities of the computing device 200 with physical gestures as well as button-presses. The controller connects to the computing device 200 using wireless technology that allows data exchange over short distances (e.g., 30 feet). The controller may additionally include a "rumble" feature (i.e., a shaking of the controller during certain points in the game) and/or an internal speaker.

The controller may additionally or alternatively be designed to capture biometric readings using sensors in the remote to record data including, for example, skin moisture, heart rhythm, and muscle movement. Further still, in various aspects, any technology suitable for measuring and/or capturing motion, facial expressions and/or any other physical or physiological state of a user may be used.

As noted above, the computing device 200 may be an electronic gaming console. Alternatively, the computing device 200 may be implemented as a general-purpose computer, a set-top box, or a hand-held gaming device. Further, similar user devices may contain more or less operating components.

The CPU 204, the vector unit 206, the graphics-processing unit 208, and the I/O processor 210 communicate via a system bus 236. Further, the CPU 204 communicates with the main memory 202 via a dedicated bus 238, while the vector unit 206 and the graphics-processing unit 208 may communicate through a dedicated bus 240. The CPU 204 executes programs stored in the OS ROM 226 and the main memory 202. The main memory 202 may contain pre-stored programs and programs transferred through the I/O Processor 210 from a CD-ROM, DVD-ROM, or other optical disc (not shown) using the optical disc control unit 230. The I/O processor 210 primarily controls data exchanges between the various devices of the computing device 200 including the CPU 204, the vector unit 206, the graphics processing unit 208, and the controller interface 214.

The graphics-processing unit 208 executes graphics instructions received from the CPU 204 and the vector unit 206 to produce images for display on a display device (not shown). For example, the vector unit 206 may transform objects from three-dimensional coordinates to two-dimensional coordinates, and send the two-dimensional coordinates to the graphics-processing unit 208. Furthermore, the sound processing unit 230 executes instructions to produce sound signals that are outputted to an audio device such as speakers (not shown).

A user of the computing device 200 provides instructions via the controller interface 214 to the CPU 204. For example, the user may instruct the CPU 204 to store certain information on the memory card 216 or instruct the computing device 200 to perform some specified action. Example controllers associated with the controller interface 214 may include a touch-screen, keyboards, and game controllers.

Other devices may be connected to the computing device 200 via the USB interface 218, the IEEE interface 220, and the AUX interface 222. Specifically, the tracking device 224, including a camera or a sensor may be connected to the computing device 200 via the AUX interface 222, while a controller may be connected via the USB interface 218. In some aspects, a VR headset or related hardware equipment may be communicatively coupled to the computing device 200 via one or more computing interfaces. Hardware and related software for implementing an augmented reality (AR) experience may similarly be coupled to the computing device 200 via one or more computing interfaces.

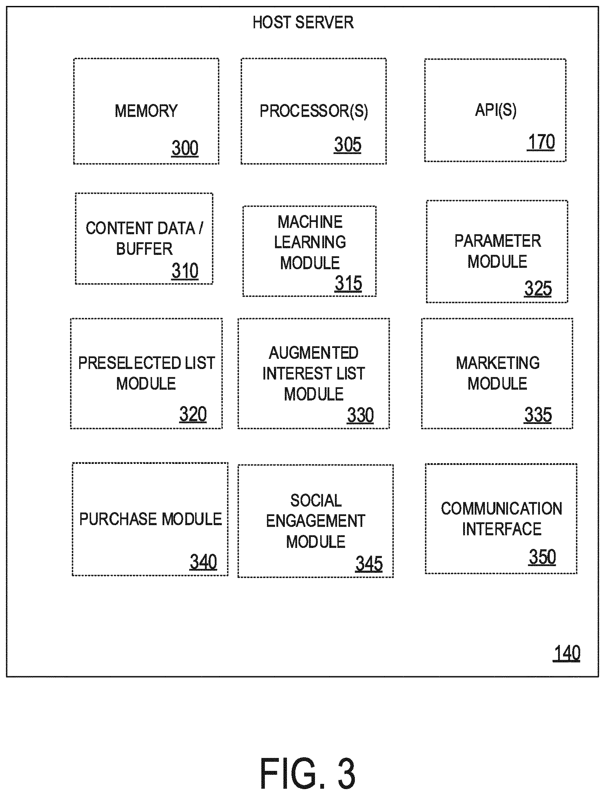

FIG. 3 is a block diagram of an exemplary host server 140 that may be used in context of the system of FIG. 1. The host server 140 may include a plurality of different features that further facilitates automatic purchase of video games or digital media and related game assets. As illustrated in FIG. 3, the host server 140 may include memory 300, one or more processor 305, the host server application program interface (API) 140, a gaming content storage and buffer 310, a machine-learning module 315, a parameter module 325, a preselected list module 320, an augmented interest list module 330, a marketing module 335, a purchasing module 340, a social engagement module 345, and a communication interfaces 350.

According to one aspect, the host application program interface (API) 170 allows a host to manage how data, including but not limited to the game stream, is distributed to remote users. Using the API 170, an administrator (e.g., developer, gaming platform provider, streaming game aggregator) can customize and modify how the host server operates with respect to what data is retrieved from the content server 110, how the game stream is presented to the user devices.

In various aspects, the gaming content storage and buffer 310 may be used to store the streaming game temporarily until it can be processed and distributed to users. In various examples, the gaming storage and buffer is a physical memory storage of the host server 140.

According to one aspect, the machine-learning module 315 recommends items to add to the preselected list. For example, the machine-learning module 315 may recommend items to add to the preselected list based upon user's known social networks and/or the user's past activity and interactions with the network system 100 and the host server 140. The machine-learning module 315 may also suggest items (e.g. digital media or digital assets) to add to the preselected list based upon the user's unknown or passive social networks based on location, demographics etc. For example, the user may have gaming interests and other commonalities with others, that do not have active social network connections.

In another aspect, the machine-learning module 315 may identify or set and enact suggested thresholds based on the user's purchase history. In this aspect, the user may modify the threshold as desired. The thresholds, whether determined by the machine-learning module or modified by the user, may be used in the parameter module 325.

In other aspects, the machine-learning module 315 may recommend additional products based upon group purchasing dynamics. The machine-learning module may facilitate game plays or purchases in legacy games. The machine-learning module 315 may help identify a number of users who may not know each other, but have the same items on their wish list or preselected list. The machine-learning module 315 may recommend the identified users to book discounted video games or products, which also creates a new game play community that may lengthen life span of the legacy games. When the life span of the legacy games increases, there may be more opportunities to sell the legacy games to a dedicated group of players remain.

The preselected list module 320 may include preselected lists of products provided by users. The products may include games, digital media, and associated components with the games or digital media, among others. In various aspects, the data stored by the preselected list module may be used to further train the machine-learning module 315. Additionally, the preselected list module may be modified by the outputs of the machine-learning module 315 in order to further identify and add gaming content closely related to that pre-selected by the user. For example, a user may identify a particular game or a particular game asset of interest that is organized and stored by the preselected list module 320. In this example, the preselected list module 320 may work in conjunction with one or more other module described herein to identify another game content (e.g. a more powerful weapon of the same class or a higher resolution gaming asset) as that selected by the user and augment or update a preselected item list.

According to various aspects, the parameter module 325 may be used to establish parameters or thresholds for the automatic purchase of the products on wish lists or preselected lists from users. For example, the parameters may include discount rates and maximum prices for the one or more products. The parameter module 325 may establish auto-purchase parameters or thresholds, such as percent discount, a number of similar items sold, a number of friends who have bought the products. The parameters may have a threshold, which may be percentage based, e.g. 20% or 35% discount. The parameter module 325 may have setup a maximum price for automatic purchase. There may be no refunds after the automatic purchase.

The host server also includes an augmented interest list module 330 that may include a combination of the preselected list of the products and the respective recommended list of additional products based upon the machine-learning module 315 for one of the users. In various aspects, the data stored by the preselected list module may be used to further train the machine-learning module 315. Additionally, the preselected list module may be modified by the outputs of the machine-learning module 315 in order to further identify and add gaming content closely related to that pre-selected by the user. For example, a user may identify a particular game or a particular game asset of interest that is organized and stored by the preselected list module 320. In this example, the preselected list module 320 may work in conjunction with one or more other module described herein to identify another game content (e.g. a more powerful weapon of the same class or a higher resolution gaming asset) as that selected by the user and augment or update a preselected item list.

According to at least one aspect, the marketing module 335 may be used to send various marketing information to the users. For example, the marketing module 335 may send the at least one user reminders to the users to review the augmented interest list periodically. The marketing module 335 may also send the users highlights for price difference of products on the augmented interest list periodically. The marketing module 335 may also send the users suggested prices to purchase bundles of the products on the augmented interest list periodically. The marketing module 335 may also offer discounts of products to the users based upon the user's purchase history.

In other aspects, the marketing module 335 may also offer discounts based on user's data and market intelligence. The marketing module 335 may send users periodically (e.g. monthly) reminder user to review or update wish list. The marketing module 335 may send users periodically (e.g. monthly) offers to purchase bundles or suggest price thresholds. The marketing module 335 may periodically send users (e.g. monthly) highlights of price difference. The marketing module 335 may also offer incentives to users to purchase bundles of gaming content. By way of example, bundle purchases may include the purchase of multiple gaming content items that may or may not be related to the same game, for a price less than purchasing the content items individually.

In various other aspects, the marketing module 335 may offer crowd-funding sale, i.e. if there are a certain number of users buy a product, the price of the product drops down to a certain amount of dollars. For example, if "N" number of users buy a product, then the price of the game content is reduced to a particular amount or a percentage discount may be offered. In one aspect, the price reduction may be proportional to the number users participating in the sale. In another aspect, the price reduction is available only when number of purchasers exceeds a threshold as determined by the game content producer.

In one aspect, the marketing module 335 may send offers to potential users or social connections identified using the machine-learning module 315, where the discount may not be exactly what the users hope for (e.g. 25% off). The offers may be that the users can have 25% off if the user guarantees five purchases within a window of time.

As such, the offer may still be profitable for the game content producer within an acceptable margin at least from a business point of view. It may be difficult to justify a spending of $100, but may be easier to a group of users or buyers to spend $25 each time, but at four different times within the window of time. The sale may lead into creation of a new social network, which may open new social connections. The social connections, in turn, may facilitate group buying pressure, especially where one player may be pressured to power up by buying new games or game assets.

The host server 140 also includes the purchasing module 340 that may automatically replenish a user's virtual payment wallet or to charge a users' credit card. According to one aspect, the purchasing module 340 may also set up or identify separate or dedicated payment options for desired items on the user's preselected list or updated list. Alternatively, the purchasing module may limit the amount of funds available via a spending limit to purchase game content.

According to various aspects, the social engagement module 345 facilitates and encourages further engagement with the game stream and social interactions among the users at the user devices 160. In various aspects, the social engagement module 345 may facilitate social interactions between groups of users. For example, the social engagement module 345 may generate a video chat among users of the game stream. In another aspect, the social engagement module 345 may facilitate communication between users using chat, email, video chat, or any other suitable communication modalities.

In one aspect, the communication interface 350 facilitates communication between the various features of the system of FIG. 1. For example, this would facilitate transmission of information from the content server 110 to the host server 140 and from the host server to the user devices 160.

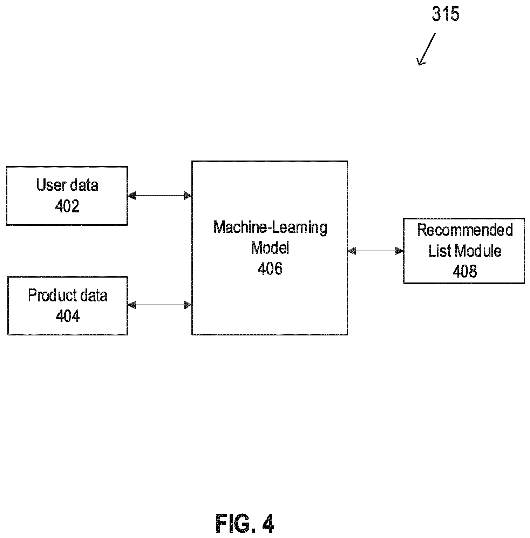

FIG. 4 is a block diagram illustrating an exemplary machining-learning module 315 for recommending products, in accordance with some aspects of the disclosed technology. The machine-learning module 315 may use the machine-learning model or algorithm for creating recommended list to the users, including one of collaborative filtering algorithm, content-based filtering, desirable content model, personalized video game ranker, or knowledge based recommendation systems.

As shown in FIG. 4, the machine-learning model 406 receives the user's data 402 from data source server 190. The user's data may include the user's purchase history, the user's social network, the user's location and demographics, among others. The machine-learning model 406 also receives the product data 404 from data source server 190. The product data may include products' prices, discounts, sale volumes, among others. The machine-learning model 406 outputs recommended lists of products to a recommended list module 408 which includes the recommended list that may be of interest to the user(s).

In some aspects, the desirable content model can take events from users' online activity to recommend a small subset of video games, digital media, or digital assets. Identification of desirable content is the first stage of determining a content recommendation. Given a query, the machining-learning algorithm generates a set of relevant desirable content. There are two common candidate generation approaches, including content-based filtering and collaborative filtering.

In some aspects, the collaborative filtering algorithm can identify users who buy similar items in order to recommend products. The collaborative filtering simultaneously uses similarities between past or present queries and items purchased or otherwise selected to provide recommendations. For example, if user A is similar to user B, and user B likes video game 1, then the machine-learning algorithm can recommend video game content 1 to user A (even if user A hasn't played or viewed game content similar to video game content 1).

In some aspects, the content-based filtering algorithm can recommend items based upon user's purchase history, ratings, or feedback, among others. The content-based filtering uses similarity between items to recommend items similar to what the user likes. For example, if user A plays video game A, the system can recommend similar video games to game A to that user.

In some aspects, the knowledge-based recommendation system can analyze each time in a user's query to recommend a combination of items or products. The knowledge-based recommendation system is based on knowledge about the item assortment, user preferences, and recommendation criteria (i.e., which item should be recommended in which context). These systems are applied in scenarios where alternative approaches such as collaborative filtering and content-based filtering cannot be applied.

In some aspects, the personalized video game ranker can rank best matches from an entire database for each user in a personalized way. For example, the personalized video game ranker may rank the most likely best matches regardless of game content type based on user preferences or user equipment.

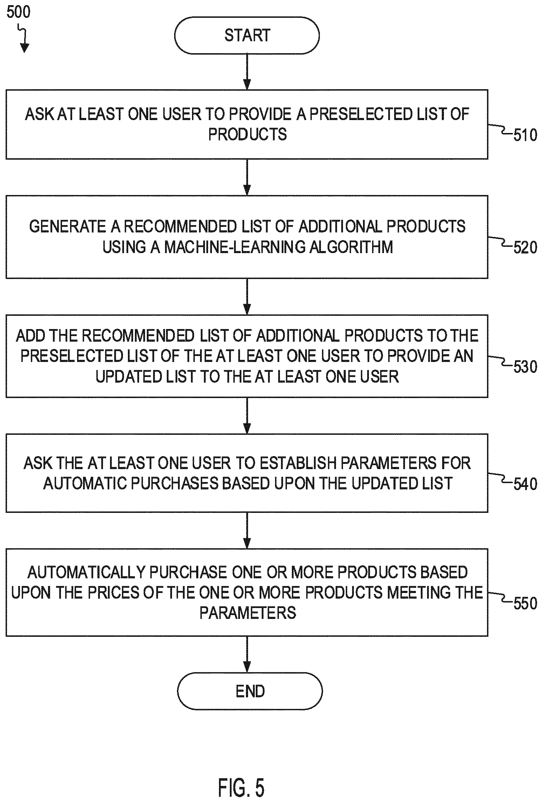

FIG. 5 is a flowchart illustrating an exemplary method 500 for automatic purchasing of products, in accordance with some aspects of the disclosed technology. The method 500 may be embodied as executable instructions in a non-transitory computer readable storage medium including but not limited to a CD, DVD, or non-volatile memory such as a hard drive. The instructions of the storage medium may be executed by a processor (or processors) to cause various hardware components of a computing device hosting or otherwise accessing the storage medium to perform or aid in performing the method. The steps identified in FIG. 5 (and the order thereof) are exemplary and may include various alternatives, equivalents, or derivations thereof including but not limited to the order of execution of the same.

Although the example method 500 depicts a particular sequence of operations, the sequence may be altered without departing from the scope of the present disclosure. For example, some of the operations depicted may be performed in parallel or in a different sequence that does not materially affect the function of the method 500. In other examples, different components of an example device or system that implements the method 500 may perform functions at substantially the same time or in a specific sequence.

According to some examples, the method 500 may include asking at least one user to provide preselected list of products at block 510. For example, the host server 140 illustrated in FIG. 1 may query at least one user at user device 160 or query a user profile for a preselected list of products.

According to some examples, the method includes generating a recommended list of additional products using a machine-learning algorithm at block 520. For example, the machine-learning module 315 illustrated in FIG. 3 and FIG. 4 may generate a recommended list of additional products using a machine-learning algorithm. The machine-learning algorithm may include one of collaborative filtering algorithm, content-based filtering, desirable content model, personalized video game ranker, or knowledge based recommendation systems.

According to some examples, the method 500 may include adding the recommended list of additional products to the preselected list of the at least one user to provide an augmented interest list to the at least one user at block 530. For example, the host server 140 illustrated in FIG. 1 may add the recommended list of additional products to the preselected list of the at least one user at user device 160 to provide an augmented interest list to the at least one user. The augmented interest list may be stored in the augmented interest list module 330 as illustrated in FIG. 2.

In some variations, the additional products are recommended using the machine-learning algorithm to recommend based upon the at least one user's social network, which may be obtained from the data source server 190.

In some variations, the additional products are recommended using the machine-learning algorithm to recommend based upon the at least one user's location and demographics, which may be obtained from the data source server 190.

In some variations, the augmented interest list may include a list of games, digital media, and associated components with the games or digital media.

According to some examples, the method 500 may include asking the at least one user to establish parameters for automatic purchases based upon the augmented interest list at block 540. For example, the host server 140 illustrated in FIG. 1 may ask the at least one user to establish parameters for automatic purchases based upon the augmented interest list. The parameters may be stored in the parameter module 325 as illustrated in FIG. 2. In some variations, the parameters may include discount rates and maximum prices for the one or more products on the augmented interest list.

According to some examples, the method 500 may include automatically purchasing one or more products when the prices of the one or more products meet the parameters at block 550. For example, the host server 140 illustrated in FIG. 1 may automatically purchase one or more products on the augmented interest list when the prices of the one or more products meet the parameters. The prices of the products are product data, which may be obtained from the data source server 190. Specifically, the host server 140 includes the purchasing module 340 for executing the automatic purchasing of the video games or digital media on the augmented interest list which is stored in the augmented interest list module 330 as illustrated in FIG. 2.

In some variations, the method 500 may also include sending the at least one user reminders to the at least one user to review the augmented interest list periodically.

In some variations, the method 500 may also include sending the at least one user highlights for price difference of the one or products on the augmented interest list periodically.

In some variations, the method 500 may also include sending the at least one user suggested prices to purchase bundles of the products on the augmented interest list periodically.

In some variations, the method 500 may also include offering the at least one user discounts of the one or more products based upon the at least one user's purchase history.

The foregoing detailed description of the technology herein has been presented for purposes of illustration and description. It is not intended to be exhaustive or to limit the technology to the precise form disclosed. Many modifications and variations are possible in light of the above teaching. The described aspects were chosen in order to best explain the principles of the technology and its practical application to thereby enable others skilled in the art to best utilize the technology in various aspects and with various modifications as are suited to the particular use contemplated. It is intended that the scope of the technology be defined by the claim.

## Claims

1. A method for automatic purchase of digital media and digital assets, the method comprising:
asking at least one user to provide a preselected list of products;
generating a recommended list of additional products using a machine-learning algorithm, wherein the machine-learning algorithm comprises one of collaborative filtering algorithm, content-based filtering, desirable content model, personalized video game ranker, or knowledge based recommendation systems;
adding the recommended list of additional products to the preselected list of the at least one user to provide an augmented interest list to the at least one user;
asking the at least one user to establish parameters for automatic purchases based upon the augmented interest list; and
automatically purchasing one or more products when a price of the one or more products satisfies the parameters.

2. The method of claim 1, wherein the parameters comprise discount rates and maximum prices for the one or more products on the augmented interest list.

3. The method of claim 1, wherein the augmented interest list comprises a list of games, digital media, and associated components with the games or digital media.

4. The method of claim 1, wherein the additional products are recommended using the machine-learning algorithm to recommend based upon the at least one user's social network.

5. The method of claim 1, wherein the additional products are recommended using the machine-learning algorithm to recommend based upon the at least one user's location and demographics.

6. The method of claim 1, further comprising sending the at least one user reminders to the at least one user to review the augmented interest list periodically.

7. The method of claim 1, further comprising sending the at least one user highlights for price difference of the one or products on the augmented interest list periodically.

8. The method of claim 1, further comprising sending the at least one user suggested prices to purchase bundles of the products on the augmented interest list periodically.

9. The method of claim 1, further comprising offering the at least one user discounts of the one or more products based upon the at least one user's purchase history.

10. A system for automatic purchasing of digital media, the system comprising:
one or more processors; and
a non-transitory computer readable medium comprising instructions stored therein, the instructions, when executed by the one or more processors, cause the processors to perform operations comprising:
asking at least one user to provide preselected list of products;
generating a recommended list of additional products using a machine-learning algorithm, wherein the machine-learning algorithm comprises one of collaborative filtering algorithm, content-based filtering, desirable content model, personalized video game ranker, or knowledge based recommendation systems;
adding the recommended list of additional products to the preselected list of the at least one user to provide an augmented interest list to the at least one user;
asking the at least one user to establish parameters for automatic purchases based upon the augmented interest list; and
automatically purchasing one or more products when a price of the one or more products satisfies the parameters.

11. The system of claim 10, wherein the augmented interest list comprises a list of games, digital media, and associated components with the games or digital media.

12. The system of claim 10, wherein the additional products are recommended using the machine-learning algorithm to recommend based upon the at least one user's social network.

13. The system of claim 10, wherein the additional products are recommended using the machine-learning algorithm to recommend based upon the at least one user's location and demographics.

14. A non-transitory computer readable medium comprising instructions, the instructions, when executed by a computing system, cause the computing system to perform operations comprising:
asking at least one user to provide preselected list of products;
generating a recommended list of additional products using a machine-learning algorithm, wherein the machine-learning algorithm comprises one of collaborative filtering algorithm, content-based filtering, desirable content model, personalized video game ranker, or knowledge based recommendation systems;
adding the recommended list of additional products to the preselected list of the at least one user to provide an augmented interest list to the at least one user;
asking the at least one user to establish parameters for automatic purchases based upon the augmented interest list; and
automatically purchasing one or more products when a price of the one or more products satisfies the parameters.

15. The non-transitory computer readable medium of claim 14, wherein the parameters comprise discount rates and maximum prices for the one or more products on the augmented interest list.
